(19) Europäisches Patentamt
European Patent Office
Office européen des brevets

(11) **EP 0 320 762 B1**

(12) **EUROPÄISCHE PATENTSCHRIFT**

(45) Veröffentlichungstag und Bekanntmachung des Hinweises auf die Patenterteilung:
**27.03.1996  Patentblatt 1996/13**

(51) Int. Cl.$^6$: **C07F 17/00**

(21) Anmeldenummer: **88120401.0**

(22) Anmeldetag: **07.12.1988**

(54) **Verfahren zur Herstellung einer chiralen, stereorigiden Metallocen-Verbindung**

Process for the preparation of a chiral, stereorigid metallocen compound

Procédé pour la préparation d'un composé métallocène chiral stéréorigide

(84) Benannte Vertragsstaaten:
**BE DE ES FR GB IT NL**

(30) Priorität: **18.12.1987 DE 3742934**

(43) Veröffentlichungstag der Anmeldung:
**21.06.1989  Patentblatt 1989/25**

(73) Patentinhaber: **HOECHST AKTIENGESELLSCHAFT D-65926 Frankfurt am Main (DE)**

(72) Erfinder:
• **Rohrmann, Jürgen, Dr. D-8056 Neufahrn (DE)**
• **Hermann, Wolfgang, Anton, Prof. Dr. D-8051 Giggenhausen (DE)**

(56) Entgegenhaltungen:
**WO-A-87/03604**

• **COMPTES RENDUS HEBDOMADAIRES DES SEANCE DE L'ACADEMIE DES SCIENCES, Band 267,Nr. 6, Serie C, 5. August 1968, Seiten 467-470, Paris, FR; E. MARECHAL et al.:"Préparation et polymérisation cationique du diméthyl di-(indényl-I.I') silane"**
• **"Gmelin Handbuch der Anorganischen Chemie", achte völlig neu bearbeiteteAuflage, Teil 2, 1980, Seiten 223-232, Springer-Verlag, Berlin, DE; U. THEWALT:"Titan-organische Verbindungen"**
• **J. Organomet. Chem.,232(1982),233-247**
• **J. Organomet. Chem.,288(1985),63-67**

**Beschreibung**

Die vorliegende Erfindung bezieht sich auf ein Verfahren zur Herstellung von chiralen, stereorigiden Metallocen-Verbindungen von Titan, Zirkon und Hafnium.

Chirale, stereorigide Metallocen-Verbindungen sind zusammen mit speziellen Cokatalysatoren, wie beispielsweise Aluminoxanen, hochaktive stereospezifische Katalysatoren zur Herstellung von hochisotaktischem Polypropylen. Die chiralen Verbindungen können hierbei als Racemat eingesetzt werden, sie dürfen jedoch nicht als meso-Form vorliegen, da diese Form keine Stereospezifität zeigt.

Es besteht Interesse daran, eine Verbindung des Typs $[(CH_3)_2Si(indenyl)_2]ZrCl_2$ für die Polymerisation von 1-Olefinen zu verwenden. Es war jedoch bislang nicht möglich, eine derartige Verbindung in Form des reinen Racemats zu gewinnen. Bei allen Versuchen wurde stets eine Mischung mit der meso-Form erhalten.

In J. Organomet. Chem., 288 (1985) 631 wird die Herstellung eines ethylenverbrückten Zirconocens beschrieben, während in J. Organomet. Chem., 232 (1982) 233 die Synthese eines analogen ethylenverbrückten Titanocens beschrieben wird.

Die dort beschriebenen Verfahren sind präparativ sehr aufwendig und liefern Metallocene, die zum Teil einen sehr hohen Anteil an der unerwünschten meso-Form aufweisen.

Bekannt sind Katalysatoren, welche aus substituierten Mono-, Di- und Tricyclopentadienyl-Koordinationskomplexen von Übergangsmetallen und Aluminoxanen bestehen (vgl. EP-A 129 368). Sie dienen zur Herstellung von Polyolefinen mit definierter Molmasse. Über die Herstellung der Übergangsmetallkomplexe wird in dieser Druckschrift nichts gesagt.

Nunmehr wurde gefunden, daß man silylverbrückte Metallocen-Verbindungen in nahezu reiner racemischer Form erhalt, wenn man ein Alkalisalz einer Silylindenylverbindung mit einem Titan-, Zirkon- oder Hafniumhalogenid bei einer tiefen Temperatur umsetzt.

Die Erfindung betrifft somit ein Verfahren zur Herstellung einer chiralen, stereorigiden Metallocen-Verbindung der Formel I

$$[R^1R^2Si(indenyl)_2]Me^2X_2 \qquad\qquad (I),$$

worin $R^1$ und $R^2$ gleich oder verschieden sind und eine $C_1$- bis $C_{20}$-Alkylgruppe, eine $C_2$- bis $C_{20}$-Alkenylgruppe, eine $C_6$- bis $C_{20}$-Arylgruppe, eine $C_7$- bis $C_{20}$-Alkylarylgruppe oder eine $C_7$- bis $C_{20}$-Aralkylgruppe bedeuten, $Me^2$ Titan, Zirkon oder Hafnium ist und X ein Halogenatom bedeutet, dadurch gekennzeichnet, daß eine Verbindung der Formel II

$$[R^1R^2Si(indenyl)_2]Me_2^1 \qquad\qquad (II),$$

worin $R^1$ und $R^2$ die obengenannte Bedeutung haben und $Me^1$ ein Alkalimetall ist, mit einer Verbindung der Formel III

$$Me^2X_4 \qquad\qquad (III),$$

worin $Me^2$ und X die obengenannte Bedeutung haben, bei einer Temperatur von -78 °C bis +25 °C in einem inerten Lösemittel während 10 bis 1000 min umgesetzt wird.

Für das erfindungsgemäße Verfahren wird eine Silylverbindung der Formel II eingesetzt

$$[R^1R^2Si(indenyl)_2]Me_2^1 \qquad\qquad (II).$$

In dieser Formel ist $Me^1$ ein Alkalimetall, vorzugsweise Lithium. $R^1$ und $R^2$ sind gleich oder verschieden und bedeuten $C_1$- bis $C_{20}$-, vorzugsweise $C_1$- bis $C_6$-Alkyl, $C_2$- bis $C_{20}$-, vorzugsweise $C_2$- bis $C_6$-Alkenyl, $C_6$- bis $C_{20}$-, vorzugsweise $C_6$- bis $C_{12}$-Aryl, $C_7$- bis $C_{20}$-, vorzugsweise $C_7$- bis $C_{10}$-Alkylaryl, $C_7$- bis $C_{20}$-, vorzugsweise $C_7$- bis $C_{10}$-Aralkyl, insbesondere bedeuten $R^1$ und $R^2$ Methyl oder Phenyl. Besonders bevorzugt wird $Li_2[(CH_3)_2Si(indenyl)_2]$ eingesetzt.

Die Verbindung der Formel II wird umgesetzt mit einer Verbindung der Formel III

$$Me^2X_4 \qquad\qquad (III),$$

worin $Me^2$ Titan, Zirkon oder Hafnium, vorzugsweise Zirkon oder Hafnium, und X ein Halogenatom, vorzugsweise Chlor, sind. Diese Metallhalogenide werden entweder als solche oder als Solvatkomplexe, beispielsweise mit Tetrahydrofuran, verwendet. Die Lösemittel müssen frei von Feuchtigkeit und Sauerstoff sein.

Die Reaktion wird in einem inerten Lösemittel durchgeführt. Geeignete Lösemittel sind aromatische Kohlenwasserstoff wie beispielsweise Toluol, Xylol, aliphatische Kohlenwasserstoffe wie beispielsweise Hexan, Pentan, oder Ether wie beispielsweise Diethylether, Tetrahydrofuran, Dioxan. Vorzugsweise werden Toluol, Diethylether und Tetrahydrofuran verwendet.

Die Reaktionstemperatur beträgt -78 °C bis +25 °C, vorzugsweise -40 °C bis 0 °C.

EP 0 320 762 B1

Die Reaktionszeit beträgt 10 bis 1000, vorzugsweise 60 bis 180 min.

Die Reaktion wird unter Rühren und in einer Inertgasatmosphäre durchgeführt.

Die so erhaltenen ansa-Metallocen-Verbindungen der Formel I

$$[R^1R^2Si(indenyl)_2]Me^2X_2 \qquad\qquad (I),$$

worin $R^1$, $R^2$, $Me^2$ und X die oben angegebene Bedeutung haben, können aus aliphatischen und aromatischen Kohlenwasserstoffen sowie etherischen oder halogenhaltigen Lösemitteln umkristallisiert werden. Als besonders günstig erwiesen sich Mischungen aus Chloroform und Hexan.

Das erfindungsgemäße Verfahren weist den Vorteil auf, daß die silylverbrückten Metallocen-Verbindungen in der racemischen Form entstehen und keine oder nur sehr geringe Anteile der meso-Form enthalten. Besonders bei der Verwendung der Komplexe als Katalysatoren, wie zum Beispiel in der Polymerisation von $\alpha$-Olefinen, ist dies von entscheidender Bedeutung, da nur die racemische, nicht aber die meso-Form Stereoselektivität zeigt. Während z.B. rac-$[C_2H_4(indenyl)_2]TiCl_2$ hochisotaktisches Polypropylen liefert, erzeugt dessen meso-Form nur ataktisches Polymer.

Alle nachfolgenden Arbeitsoperationen sind in Inertgasatmosphäre unter Verwendung absolutierter Lösemittel durchgeführt worden.

**Beispiel 1**

rac-[(Dimethylsilandiyl)bis($\eta^5$-indenyl)]hafniumdichlorid (rac-$[(CH_3)_2Si(indenyl)_2]HfCl_2$)

Eine Lösung von 18,2 g (63,2 mmol) $(CH_3)_2Si(indenyl)_2$ in 20 cm$^3$ Diethylether und 30 cm$^3$ Hexan wurde bei Raumtemperatur unter Wasserkühlung langsam mit 52 cm$^3$ (130 mmol) einer 2,5 M Hexan-Lösung von Butyllithium versetzt. Man rührte noch ca. 2 h bei Raumtemperatur und filtrierte den farblosen Niederschlag über eine Glasfritte ab. Nach mehrmaligem Waschen mit Hexan und anschließender Trocknung im Ölpumpenvakuum erhielt man 20,5 g eines farblosen Pulvers, das ca. 85 Gew.-% $Li_2[(CH_3)_2Si(indenyl)_2]$ enthielt (Etherat-Komplex; 92 % d.Th.).

Eine Suspension von 5,40 g (11,5 mmol) $HfCl_4 \cdot 2THF$ in 80 cm$^3$ Diethylether wurde bei -78 °C mit 4,76 g (13,5 mmol) des Dilithiumsalzes versetzt. Man ließ die Reaktionsmischung unter Rühren langsam auf Raumtemperatur erwärmen, wobei ab ca. -30 °C eine rasche Gelbfärbung einsetzte. Nach 1 h bei Raumtemperatur wurde die Lösung über eine Glasfritte filtriert. Der orangebraune Rückstand wurde mit insgesamt 30 cm$^3$ Chloroform extrahiert. Die orangefarbene Lösung wurde bis zur beginnenden Kristallisation eingeengt. Diese wurde bei -35 °C und Zusatz von Hexan vervollständigt. Insgesamt ließen sich 2,0 g (32 %) rac-$[(CH_3)_2Si(indenyl)_2]HfCl_2$ in Form orangegelber Kristalle isolieren, die sich bei einer Temperatur über 100 °C allmählich zersetzen.

$^1$H-NMR-Spektrum (CDCl$_3$): 7,00-7,57 (m,8,Arom.-H), 6,81 (d,2,$\beta$-C$_5$H$_2$), 6,04 (d,2,$\alpha$-C$_5$H$_2$), 1,11 (s,6,Si(CH$_3$)$_2$).

**Beispiel 2**

rac-[(Dimethylsilandiyl)bis($\eta^5$-indenyl)]zirkondichlorid (rac-$[(CH_3)_2Si(indenyl)_2]ZrCl_2$)

1,35 g (3,60 mmol) $ZrCl_4 \cdot 2THF$ und 1,40 g (3,96 mmol) $Li_2[(CH_3)_2Si(indenyl)_2]$ wurden in 40 cm$^3$ Diethylether analog Beispiel 1 umgesetzt und aufgearbeitet. Man erhielt 350 mg (22 %) rac-$[(CH_3)_2Si(indenyl)_2]ZrCl_2$ als orange Kristalle, die sich bei einer Temperatur über 130 °C allmählich zersetzten.

$^1$H-NMR-Spektrum (CDCl$_3$): 7,04-7,60 (m,8,Arom.-H), 6,91 (d,2,$\beta$-C$_5$H$_2$), 6,08 (d,2,$\alpha$-C$_5$H$_2$), 1,12 (s,6,Si(CH$_3$)$_2$).

**Beispiel 3**

rac-[(Methylphenylsilandiyl)bis($\eta^5$-indenyl)]hafniumdichlorid (rac-$[(CH_3)(C_6H_5)Si(indenyl)_2]HfCl_2$)

Eine Lösung von 4,60 g (13,12 mmol) $(CH_3)(C_6H_5)Si(indenyl)_2$, hergestellt aus Indenyllithium und Methylphenyldichlorsilan, in 10 cm$^3$ Diethylether und 20 cm$^3$ Hexan wurde bei Raumtemperatur unter Wasserkühlung langsam mit 12 cm$^3$ (30 mmol) einer 2,5 M Hexan-Lösung von Butyllithium versetzt. Man rührte noch 30 min bei Raumtemperatur und entfernte das Lösemittel unter vermindertem Druck. Der hellbraune Rückstand wurde im Ölpumpenvakuum bei 40 °C getrocknet und in 30 cm$^3$ Hexan aufgenommen. Die bräunliche Suspension wurde über eine Glasfritte filtriert. Der hellbraune Rückstand wurde mit Hexan gewaschen und im Ölpumpenvakuum getrocknet. Man erhielt 5,25 g eines beigefarbenen Pulvers, das 90 Gew.-% $Li_2[(CH_3)(C_6H_5)Si(indenyl)_2]$ enthielt (Etherat-Komplex; 99 % d.Th.).

Eine Suspension von 5,10 g (11,0 mmol) $HfCl_4 \cdot 2THF$ in 100 cm$^3$ Diethylether wurde bei -78 °C mit 5,25 g (13,0 mmol) des Dilithio-Salzes versetzt. Man ließ die Reaktionsmischung innerhalb 10 h auf Raumtemperatur erwärmen und filtrierte sie über eine Glasfritte ab. Der rotbraune Rückstand wurde mit 60 cm$^3$ Diethylether gewaschen. Die vereinigten orangegelben Filtrate wurden unter vermindertem Druck zur Trockne eingeengt. Der verbliebene orangegelbe Rückstand wurde in Toluol aufgenommen. Nach dem Filtrieren und Eindampfen in Vakuum erhielt man 3,1 g (47 % d.Th.) rac-[(CH$_3$)(C$_6$H$_5$)Si(indenyl)$_2$]HfCl$_2$ als gelbes Pulver.

$^1$H-NMR-Spektrum (CDCl$_3$): 6,6-8,1 (m,13,Arom.-H), 6,8-6,9 (m,2,β-C$_5$H$_2$), 6,10 und 6,16 (2xd,2,α-C$_5$H$_2$), 1,21 (s,3,SiCH$_3$).

**Beispiel 4**

Eine Lösung von 5,60 g (19,4 mmol) (CH$_3$)$_2$Si(indenyl)$_2$ in 100 cm$^3$ THF wurde bei Raumtemperatur unter Wasserkühlung langsam mit 15,5 cm$^3$ (38,7 mmol) einer 2,5 M Hexan-Lösung von Butyllithium versetzt, wobei eine Dunkelrotfärbung einsetzte. Nach 30 min Rühren bei Raumtemperatur wurde die so bereitete Lösung des Dilithio-Salzes bei 0 °C zu einer Suspension von 7,20 g (19,0 mmol) ZrCl$_4$·2THF innerhalb 6 h zugetropft. Man engte den Ansatz bis zur beginnenden Kristallisation ein, ließ noch weitere 2 h rühren und kühlte auf -35 °C. Der orangefarbene Niederschlag wurde auf einer Glasfritte abfiltrierte und aus Chloroform umkristallisiert. Man erhielt 1,50 g (17 % d.Th.) rac-[(CH$_3$)$_2$Si(indenyl)$_2$]ZrCl$_2$ als orangefarbene Kristalle.

**Patentansprüche**

**Patentansprüche für folgende Vertragsstaaten : BE, DE, FR, GB, IT, NL**

1. Verfahren zur Herstellung einer chiralen, stereorigiden Metallocen-Verbindung der Formel I

$$[R^1R^2Si(indenyl)_2]Me^2X_2 \qquad\qquad (I),$$

worin $R^1$ und $R^2$ gleich oder verschieden sind und eine C$_1$- bis C$_{20}$-Alkylgruppe, eine C$_2$- bis C$_{20}$-Alkenylgruppe, eine C$_6$- bis C$_{20}$-Arylgruppe, eine C$_7$- bis C$_{20}$-Alkylarylgruppe oder eine C$_7$- bis C$_{20}$-Aralkylgruppe bedeuten, Me$^2$ Titan, Zirkon oder Hafnium ist und X ein Halogenatom bedeutet, dadurch gekennzeichnet, daß eine Verbindung der Formel II

$$[R^1R^2Si(indenyl)_2]Me_2^1 \qquad\qquad (II),$$

worin $R^1$ und $R^2$ die obengenannte Bedeutung haben und Me$^1$ ein Alkalimetall ist, mit einer Verbindung der Formel III

$$Me^2X_4 \qquad\qquad (III),$$

worin Me$^2$ und X die obengenannte Bedeutung haben, bei einer Temperatur von -78 °C bis +25 °C in einem inerten Lösemittel während 10 bis 1000 min umgesetzt wird.

2. Chirale, stereorigide Metallocen-Verbindung der Formel I

$$[R^1R^2Si(indenyl)_2]Me^2X_2 \qquad\qquad (I),$$

worin $R^1$ und $R^2$ gleich oder verschieden sind und eine C$_2$- bis C$_{20}$-Alkenylgruppe, eine C$_6$- bis C$_{20}$-Arylgruppe, eine C$_7$- bis C$_{20}$-Alkylarylgruppe oder eine C$_7$- bis C$_{20}$-Aralkylgruppe bedeuten, Me$^2$ Titan, Zirkon oder Hafnium ist und X ein Halogenatom bedeutet.

3. Verfahren gemäß Anspruch 1, dadurch gekennzeichnet, daß in der Formel I $R^1$ und $R^2$ Methyl, Me$^2$ Zirkonium und X$_2$ Chlor ist.

**Patentanspruch für folgenden Vertragsstaat : ES**

1. Verfahren zur Herstellung einer chiralen, stereorigiden Metallocen-Verbindung der Formel I

$$[R^1R^2Si(indenyl)_2]Me^2X_2 \qquad\qquad (I),$$

worin $R^1$ und $R^2$ gleich oder verschieden sind und eine C$_1$- bis C$_{20}$-Alkylgruppe, eine C$_2$- bis C$_{20}$-Alkenylgruppe, eine C$_6$- bis C$_{20}$-Arylgruppe, eine C$_7$- bis C$_{20}$-Alkylarylgruppe oder eine C$_7$- bis C$_{20}$-Aralkylgruppe bedeuten, Me$^2$ Titan, Zirkon oder Hafnium ist und X ein Halogenatom bedeutet, dadurch gekennzeichnet, daß eine Verbindung der Formel II

$$[R^1 R^2 Si(indenyl)_2]Me_2^1 \qquad\qquad\qquad (II),$$

worin $R^1$ und $R^2$ die obengenannte Bedeutung haben und $Me^1$ ein Alkalimetall ist, mit einer Verbindung der Formel III

$$Me^2X_4 \qquad\qquad\qquad (III),$$

worin $Me^2$ und X die obengenannte Bedeutung haben, bei einer Temperatur von -78 °C bis +25 °C in einem inerten Lösemittel während 10 bis 1000 min umgesetzt wird.

## Claims

### Claims for the following Contracting States : BE, DE, FR, GB, IT, NL

1. A process for the preparation of a chiral, stereorigid metallocene compound of the formula I

$$[R^1 R^2 Si(indenyl)_2]Me^2X_2 \qquad\qquad\qquad (I)$$

in which $R^1$ and $R^2$ are identical or different and denote a $C_1$- to $C_{20}$-alkyl group, a $C_2$- to $C_{20}$-alkenyl group, a $C_6$- to $C_{20}$-aryl group, a $C_7$- to $C_{20}$-alkylaryl group or a $C_7$- to $C_{20}$-aralkyl group, $Me^2$ is titanium, zirconium or hafnium, and X denotes a halogen atom, which comprises reacting a compound of the formula II

$$[R^1 R^2 Si(indenyl)_2]Me_2^1 \qquad\qquad\qquad (II)$$

in which $R^1$ and $R^2$ have the abovementioned meaning and $Me^1$ is an alkali metal, with a compound of the formula III

$$Me^2X_4 \qquad\qquad\qquad (III)$$

in which $Me^2$ and X have the abovementioned meaning, at a temperature of from -78°C to +25°C in an inert solvent for 10 to 1000 minutes.

2. A chiral, stereorigid metallocene compound of the formula I

$$[R^1 R^2 Si(indenyl)_2]Me^2X_2 \qquad\qquad\qquad (I)$$

in which $R^1$ and $R^2$ are identical or different and denote a $C_2$- to $C_{20}$-alkenyl group, a $C_6$- to $C_{20}$-aryl group, a $C_7$- to $C_{20}$-alkylaryl group or a $C_7$- to $C_{20}$-aralkyl group, $Me^2$ is titanium, zirconium or hafnium, and X denotes a halogen atom.

3. The process as claimed in claim 1, wherein, in the formula I, $R^1$ and $R^2$ are methyl, $Me^2$ is zirconium and $X_2$ is chlorine.

### Claim for the following Contracting State : ES

1. A process for the preparation of a chiral, stereorigid metallocene compound of the formula I

$$[R^1 R^2 Si(indenyl)_2]Me^2X_2 \qquad\qquad\qquad (I)$$

in which $R^1$ and $R^2$ are identical or different and denote a $C_1$- to $C_{20}$-alkyl group, a $C_2$- to $C_{20}$-alkenyl group, a $C_6$- to $C_{20}$-aryl group, a $C_7$- to $C_{20}$-alkylaryl group or a $C_7$- to $C_{20}$-aralkyl group, $Me^2$ is titanium, zirconium or hafnium, and X denotes a halogen atom, which comprises reacting a compound of the formula II

$$[R^1 R^2 Si(indenyl)_2]Me_2^1 \qquad\qquad\qquad (II)$$

in which $R^1$ and $R^2$ have the abovementioned meaning and $Me^1$ is an alkali metal, with a compound of the formula III

$$Me^2X_4 \qquad\qquad\qquad (III)$$

in which $Me^2$ and X have the abovementioned meaning, at a temperature of from -78°C to +25°C in an inert solvent for 10 to 1000 minutes.

**Revendications**

**Revendications pour les Etats contractants suivants : BE, DE, FR, GB, IT, NL**

1. Procédé pour la préparation d'un composé métallocène chiral, stéréorigide, de formule I :

$$[R^1R^2Si(\text{indényl})_2]Me^2X_2 \qquad (I)$$

dans laquelle $R^1$ et $R^2$ sont identiques ou différents et représentent un groupe alkyle en $C_1$ à $C_{20}$, un groupe alcényle en $C_2$ à $C_{20}$, un groupe aryle en $C_6$ à $C_{20}$, un groupe alkylaryle en $C_7$ à $C_{20}$ ou un groupe aralkyle en $C_7$ à $C_{20}$, $Me^2$ représente le titane, le zirconium ou le hafnium et X représente un atome d'halogène, caractérisé en ce qu'on fait réagir un composé de formule II :

$$[R^1R^2Si(\text{indényl})_2]Me^1{}_2 \qquad (II)$$

dans laquelle $R^1$ et $R^2$ ont la signification donnée ci-dessus et $Me^1$ est un métal alcalin, avec un composé de formule III :

$$Me^2X_4 \qquad (III)$$

dans laquelle $Me^2$ et X ont la signification donnée ci-dessus, à une température de -78°C à +25°C, dans un solvant inerte, pendant 10 à 1000 minutes.

2. Composé métallocène chiral, stéréorigide, de formule I :

$$[R^1R^2Si(\text{indényl})_2]Me^2X_2 \qquad (I)$$

dans laquelle $R^1$ et $R^2$ sont identiques ou différents et représentent un groupe alcényle en $C_2$ à $C_{20}$, un groupe aryle en $C_6$ à $C_{20}$, un groupe alkylaryle en $C_7$ à $C_{20}$ ou un groupe aralkyle en $C_7$ à $C_{20}$, $Me^2$ représente le titane, le zirconium ou le hafnium et X un atome d'halogène.

3. Procédé selon la revendication 1, caractérisé en ce que, dans la formule I, $R^1$ et $R^2$ sont le méthyle, $Me^2$ est le zirconium et $X_2$ est le chlore.

**Revendication pour l'Etat contractant suivant : ES**

1. Procédé pour la préparation d'un composé métallocène chiral stéréorigide de formule :

$$[R^1R^2Si(\text{indényl})_2]Me^2X_2 \qquad (I)$$

dans laquelle $R^1$ et $R^2$ sont identiques ou différents et représentent un groupe alkyle en $C_1$ à $C_{20}$, un groupe alcényle en $C_2$ à $C_{20}$, un groupe aryle en $C_6$ à $C_{20}$, un groupe alkylaryle en $C_7$ à $C_{20}$ ou un groupe aralkyle en $C_7$ à $C_{20}$, $Me^2$ représente le titane, le zirconium ou le hafnium et X représente un atome d'halogène, caractérisé en ce qu'on fait réagir un composé de formule II :

$$[R^1R^2Si(\text{indényl})_2]Me^1{}_2 \qquad (II)$$

dans laquelle $R^1$ et $R^2$ ont la signification donnée ci-dessus et $Me^1$ est un métal alcalin, avec un composé de formule III :

$$Me^2X_4 \qquad (III)$$

dans laquelle $Me^2$ et X ont la signification donnée ci-dessus, à une température de -78°C à +25°C, dans un solvant inerte, pendant 10 à 1000 minutes.